# EUROPÄISCHE PATENTANMELDUNG

(11) **EP 4 818 025 A1**
(43) Veröffentlichungstag der Anmeldung: **07.10.2026**
(21) Anmeldenummer: 26164961.0
(22) Anmeldetag: 16.03.2026
(51) Int. Cl.: B63H 9/061

(54) **STEUERUNGSVORRICHTUNG FÜR EIN FLÄCHENHAFTES WINDSAMMELMITTEL, WIE FLUGKÖRPER, PROFIL, SEGEL ODER KITE**

(30) Priorität: 03.04.2025 DE 102025113178
(71) Anmelder: Kite Dynamics AG, 70327 Stuttgart (DE)
(72) Erfinder: Adorf, Henrik, 73230 Kirchheim unter Teck (DE); Bartels, Felix Christian, 70176 Stuttgart (DE); Jung, Till, 91275 Auerbach (DE)
(74) Vertreter: Schorr, Peter Karl

(57) **Zusammenfassung**

Die Erfindung betrifft eine Steuerungsvorrichtung (2) für ein flächenhaftes Windsammelmittel, wie Flugkörper, Profil, Segel oder Kite, mit mindestens einem Hauptantrieb (4), mit mindestens einem mit dem Hauptantrieb (4) kraftübertragend verbundenen Hauptstrang (6), mit mindestens einem ersten Nebenstrang (8), mit mindestens einer Hauptverteilereinheit (10), durch die der Hauptstrang (6) zumindest mit dem ersten Nebenstrang (8) gekoppelt ist, mit mindestens einem ersten Nebenantrieb (12), mit mindestens einem ersten Abtriebsstrang (14) für mindestens einen ersten Abnehmer, mit mindestens einer ersten Nebenverteilereinheit (16), in der der erste Nebenstrang (8) und ein mit dem ersten Nebenantrieb (12) kraftübertragend verbundener erster Nebenantriebsstrang (18) ein erstes Summierungsgetriebe (20) bilden, dessen Getriebe-Ausgang mit dem ersten Abtriebsstrang (14) gekoppelt ist, und mit mindestens einer Steuereinheit (22) durch die der Hauptantrieb (4) und/oder der erste Nebenantrieb (12) jeweils aktiv und/oder inaktiv schaltbar sind und durch die zumindest Drehzahl und Drehrichtung des Hauptantriebs (4) und/oder Drehzahl und Drehrichtung des ersten Nebenantriebs (12) einstellbar sind.

## Beschreibung

Die Erfindung betrifft eine Steuerungsvorrichtung für ein flächenhaftes Windsammelmittel, wie Flugkörper, Profil, Segel oder Kite.

Es sind Steuerungsvorrichtungen für Kites bekannt, bei denen ein Hauptantrieb vier Abnehmer gleichermaßen bedient. Wenn es sich bei den Abnehmern um Seile oder Leinen handelt, wird die Länge der Seile bzw. Leinen durch den Hauptantrieb gleichermaßen gegeben oder eingeholt, um die Flughöhe und Ausrichtung des Kites zu bestimmen.

Aus dem Stand der Technik sind Steuerungsvorrichtungen bekannt, bei denen zusätzliche Stellmittel vorgesehen sind, mit denen die Längen der Seile bzw. Leinen unterschiedlich ansteuerbar sind. Die Seile oder Leinen sind mit einem Windsammelmittel, wie Kite, verbunden, wobei bei der Verwendung von vier Seilen oder Leinen jeweils ein Seil, bzw. eine Leine, jeweils einen Anlenkpunkt des Kites ansteuert. Hierbei kann jeweils eines der Seile oder eine der Leinen unmittelbar mit dem Kite verbunden sein oder mittelbar über eine unterhalb des Kites angeordneten Steuergondel. Durch das unterschiedliche Ausgestalten der Seil- bzw. Leinenlängen, kann das Kite zum Einsammeln von Wind angesteuert werden.

Bei den bekannten Lösungen hat es sich als nachteilig herausgestellt, dass hierfür sehr raumgreifende und eine Vielzahl von Bauteilen umfassende Lösungen benötigt werden.

Eine Aufgabe eines Ausführungsbeispiels der Erfindung ist, eine Steuerungsvorrichtung für ein flächenhaftes Windsammelmittel, wie Flugkörper, Profil, Segel oder Kite, vorzuschlagen, mit der ein Abtriebsstrang effizienter ansteuerbar ist.

Diese Aufgabe wird gelöst durch eine Steuerungsvorrichtung für ein flächenhaftes Windsammelmittel, wie Flugkörper, Profil, Segel oder Kite, mit mindestens einem Hauptantrieb, mit mindestens einem mit dem Hauptantrieb kraftübertragend verbundenen Hauptstrang, mit mindestens einem ersten Nebenstrang, mit mindestens einer Hauptverteilereinheit, durch die der Hauptstrang zumindest mit dem ersten Nebenstrang gekoppelt ist, mit mindestens einem ersten Nebenantrieb, mit mindestens einem ersten Abtriebsstrang für mindestens einen ersten Abnehmer, mit mindestens einer ersten Nebenverteilereinheit, in der der erste Nebenstrang und ein mit dem ersten Nebenantrieb kraftübertragend verbundener erster Nebenantriebsstrang ein erstes Summierungsgetriebe bilden, dessen Getriebe-Ausgang mit dem ersten Abtriebsstrang gekoppelt ist, und mit mindestens einer Steuereinheit durch die der Hauptantrieb und/oder der erste Nebenantrieb jeweils aktiv und/oder inaktiv schaltbar sind und durch die zumindest Drehzahl und Drehrichtung des Hauptantriebs und/oder Drehzahl und Drehrichtung des ersten Nebenantriebs einstellbar sind.

Dadurch, dass die Steuerungsvorrichtung einen Hauptantrieb und einen ersten Nebenantrieb umfasst, kann der erste Abtriebsstrang durch den Hauptantrieb und/oder durch den ersten Nebenantrieb angesteuert werden. Hierdurch ist die Einstellbarkeit des ersten Abtriebsstrangs mittels zweier Antriebe ermöglicht, wodurch die Ansteuerbarkeit verbessert ist.

Bei dem flächenhaften Windsammelmittel kann es sich um einen Flugkörper, ein Profil, ein Segel oder um ein Kite, handeln.

An dem ersten Summierungsgetriebe können Hauptantrieb und erster Nebenantrieb mit der gleichen Drehrichtung oder mit einer entgegengesetzten Drehrichtung miteinander gekoppelt sein. Wenn beide Antriebe mit der gleichen Drehrichtung gekoppelt sind, addieren sich die Drehzahlen in Richtung auf den ersten Abtriebsstrang. Wenn die Drehrichtung des Hauptantriebs von der Drehrichtung des ersten Nebenantriebs entgegengesetzt verläuft, subtrahieren sich die Drehzahlen.

Der erste Nebenantrieb und der Hauptantrieb können durch die Steuereinheit aktiv und/oder inaktiv geschaltet werden. Hierbei kann ein reines Einstellen und Ausstellen des jeweiligen Antriebs zu verstehen sein oder aber ein Einund Auskoppeln des jeweiligen Antriebs.

Darüber hinaus ist es denkbar, dass der Hauptantrieb und/oder der erste Nebenantrieb jeweils eine Motorbremse bilden.

Bei einer Ausführungsform der Steuervorrichtung umfasst diese mindestens einen zweiten Abtriebsstrang für mindestens einen zweiten Abnehmer, der in oder an der ersten Nebenverteilereinheit angeordnet ist, wobei in der ersten Nebenverteilereinheit der erste Nebenstrang und der erste Nebenantriebsstrang ein zweites Summierungsgetriebe bilden, dessen Getriebe-Ausgang mit dem zweiten Abtriebsstrang gekoppelt ist.

Dadurch, dass die erste Nebenverteilereinheit zusätzlich zum ersten Summierungsgetriebe ein zweites Summierungsgetriebe umfasst, dessen Getriebe-Ausgang mit dem zweiten Abtriebsstrang gekoppelt ist, können zwei Abnehmer durch den Hauptantrieb und den ersten Nebenantrieb angesteuert werden. Hierdurch ist die Steuerungsvorrichtung effizient ausgestaltbar.

Bei einer Weiterbildung letztgenannter Ausführungsform erweist es sich als vorteilhaft, wenn der erste Nebenstrang am ersten Summierungsgetriebe der ersten Nebenverteilereinheit und am zweiten Summierungsgetriebe der ersten Nebenverteilereinheit eingangsseitig die gleiche Drehrichtung oder voneinander abweichende Drehrichtungen umfasst und/oder wenn der erste Nebenantriebsstrang am ersten Summierungsgetriebe der ersten Nebenverteilereinheit und am zweiten Summierungsgetriebe der ersten Nebenverteilereinheit eingangsseitig die gleiche Drehrichtung oder voneinander abweichende Drehrichtungen umfassen.

Wenn der erste Nebenstrang am ersten Summierungsgetriebe der ersten Nebenverteilereinheit und am zweiten Summierungsgetriebe der ersten Nebenverteilereinheit eingangsseitig die gleiche Drehrichtung umfasst, entsprechen sich der Anteil, der auf den ersten Abstriebsstrang und der Anteil auf den zweiten Abtriebsstrang übertragen werden. Wenn die Drehrichtung entgegengesetzt ist, haben die Anteile am ersten Abstriebsstrang und die Anteile am zweiten Abtriebsstrang entgegengesetzte Vorzeichen.

Dieses gilt in gleicher Weise für die Drehrichtung des ersten Nebenantriebsstrangs am ersten Summierungsgetriebe und am zweiten Summierungsgetriebe.

Wenn sowohl der erste Nebenstrang als auch der erste Nebenantriebsstrang am ersten Summierungsgetriebe die gleiche Drehrichtung umfassen, addieren sich die beiden eingehenden Anteile am ersten Summierungsgetriebe. Wenn die Drehrichtungen gegenläufig sind, subtrahieren sich beide Anteile in Richtung auf den ersten Abtriebsstrang.

Gleiches gilt für das zweite Summierungsgetriebe und den zweiten Abtriebsstrang.

Durch die unterschiedlichen Möglichkeiten, wie der erste Nebenstrang und der erste Nebenantriebsstrang am ersten Summierungsgetriebe und/oder am zweiten Summierungsgetriebe miteinander zusammenwirken, kann eine auf den ersten Abtriebsstrang und/oder auf den zweiten Abtriebsstrang übertragene Drehrichtung und Drehgeschwindigkeit voneinander abweichen. Hierdurch können für die einzelnen Abtriebsstränge unterschiedliche Drehrichtungen und/oder Drehzahlen eingestellt werden.

Wenn es sich bei den Abnehmern beispielsweise um Seile oder Leinen handelt, können diese hierdurch unterschiedlich schnell ausgelassen oder eingeholt werden oder ein Seil oder eine Leine eingeholt und ein anderes Seil oder eine andere Leine ausgelassen werden.

Grundsätzlich ist es denkbar, dass die Steuerungsvorrichtung lediglich den Hauptstrang und den ersten Nebenstrang umfasst. Um weitere Abnehmer ansteuern zu können, umfasst eine Ausführungsform der Steuerungsvorrichtung mindestens einen zweiten Nebenstrang, wobei der Hauptstrang durch die Hauptverteilereinheit mit dem zweiten Nebenstrang gekoppelt ist, mit mindestens einem zweiten Nebenantrieb, mit mindestens einem dritten Abtriebsstrang für mindestens einen dritten Abnehmer, mit mindestens einer zweiten Nebenverteilereinheit, in der der zweite Nebenstrang und ein mit dem zweiten Nebenantrieb kraftübertragend verbundener zweiter Nebenantriebsstrang ein drittes Summierungsgetriebe bilden, dessen Getriebe-Ausgang mit dem dritten Abtriebsstrang gekoppelt ist, wobei durch die Steuereinheit der zweite Nebenantrieb unabhängig vom Hauptantrieb und vom ersten Nebenantrieb aktiv und/oder inaktiv schaltbar und die Drehzahl und Drehrichtung des zweiten Nebenantriebs einstellbar ist.

Analog zur ersten Nebenverteilereinheit ist die zweite Nebenverteilereinheit aufgebaut, wobei sich die Anteile des zweiten Nebenstrangs und des zweiten Nebenantriebsstrangs im Summierungsgetriebe bei gleicher Drehrichtung aufaddieren, was im Getriebe-Ausgang auf den dritten Abtriebsstrang übertragen wird und bei entgegengesetzter Drehrichtung subtrahieren.

Der zweite Nebenantrieb ist unabhängig vom Hauptantrieb und vom ersten Nebenantrieb aktiv und/oder inaktiv schaltbar. Hierbei kann der zweite Nebenantrieb an- oder ausgeschaltet werden oder in den zweiten Nebenantriebsstrang eingekoppelt und wieder ausgekoppelt werden.

Bei einer Weiterbildung letztgenannter Ausführungsform erweist es sich als vorteilhaft, wenn ein vierter Abtriebsstrang für mindestens einen vierten Abnehmer vorgesehen ist, der in oder an der zweiten Nebenverteilereinheit angeordnet ist, wobei in der zweiten Nebenverteilereinheit der zweite Nebenstrang und der zweite Nebenantriebsstrang ein viertes Summierungsgetriebe bilden, dessen Getriebe-Ausgang mit dem vierten Abtriebsstrang gekoppelt ist.

Dadurch, dass die zweite Nebenverteilereinheit über das vierte Summierungsgetriebe mit einem vierten Abtriebsstrang gekoppelt ist, sind auch durch die zweite Nebenverteilereinheit zwei Abtriebsstränge ansteuerbar.

Wenn die Steuerungsvorrichtung einen Hauptantrieb, einen ersten Nebenantrieb und einen zweiten Nebenantrieb umfasst, durch den der erste Abtriebsstrang, der zweite Abtriebsstrang, der dritte Abtriebsstrang und der vierte Abtriebsstrang ansteuerbar sind, können durch die Steuerungsvorrichtung vier Abnehmer angesteuert werden. Wenn es sich bei den Abnehmern um Seile oder Leinen handelt, können diese, wie in der zuvor beschriebenen Art und Weise, mit unterschiedlichen Geschwindigkeiten eingeholt oder ausgelassen werden.

Bei einer Weiterbildung letztgenannter Ausführungsform erweist es sich als vorteilhaft, wenn der zweite Nebenstrang am dritten Summierungsgetriebe der zweiten Nebenverteilereinheit und am vierten Summierungsgetriebe der zweiten Nebenverteilereinheit eingangsseitig die gleiche Drehrichtung oder voneinander abweichende Drehrichtungen umfasst und/oder wenn der zweite Nebenantriebsstrang am dritten Summierungsgetriebe der zweiten Nebenverteilereinheit und am vierten Summierungsgetriebe der zweiten Nebenverteilereinheit eingangsseitig die gleiche Drehrichtung oder voneinander abweichende Drehrichtungen umfassen.

Hierdurch ist es ermöglicht, Drehsinn und Drehgeschwindigkeiten an dem dritten Abtriebsstrang und an dem vierten Abtriebsstrang einzustellen.

Um den ersten Nebenstrang und den zweiten Nebenstrang mit der gleichen oder mit unterschiedlichen Drehgeschwindigkeiten mit dem Hauptstrang zu koppeln, umfasst eine Weiterbildung der Steuerungsvorrichtung mindestens einen Hauptverteilerantrieb, der der Hauptverteilereinheit zugeordnet ist, und durch ein erstes Hauptverteiler-Summierungsgetriebe, das durch den Hauptstrang und durch einen mit dem Hauptverteilerantrieb kraftübertragend verbundenen Hauptverteilerantriebsstrang gebildet ist, dessen Getriebe-Ausgang mit dem ersten Nebenstrang gekoppelt ist, wobei durch die Steuereinheit der Hauptverteilerantrieb aktiv und/oder inaktiv schaltbar und die Drehzahl und Drehrichtung des Hauptverteilerantriebs einstellbar ist.

Bei einer Weiterbildung letztgenannter Ausführungsform umfasst die Steuerungsvorrichtung mindestens ein zweites Hauptverteiler-Summierungsgetriebe, das durch den Hauptstrang und durch den Hauptverteilerantriebsstrang gebildet ist und dessen Getriebe-Ausgang mit dem zweiten Nebenstrang gekoppelt ist.

Durch das Vorsehen eines ersten Hauptverteiler-Summierungsgetriebes und eines zweiten Hauptverteiler-Summierungsgetriebes, sind Drehsinn und Drehgeschwindigkeit am ersten Nebenstrang und am zweiten Nebenstrang unabhängig voneinander einstellbar.

Bei einer Weiterbildung letztgenannter Ausführungsform erweist es sich als vorteilhaft, wenn der Hauptstrang am ersten Hauptverteiler-Summierungsgetriebe der Hauptverteilereinheit und am zweiten Hauptverteiler-Summierungsgetriebe der Hauptverteilereinheit eingangsseitig die gleiche Drehrichtung oder voneinander abweichende Drehrichtungen umfasst und/oder wenn der Hauptverteilerantriebsstrang am ersten Hauptverteiler-Summierungsgetriebe der Hauptverteilereinheit und am zweiten Hauptverteiler-Summierungsgetriebe der Hauptverteilereinheit eingangsseitig die gleiche Drehrichtung oder voneinander abweichende Drehrichtungen umfassen.

Hierdurch ist es ermöglicht, den ersten Nebenstrang und den zweiten Nebenstrang mit der gleichen oder mit einer abweichenden Drehrichtung zu versehen.

Der Hauptstrang kann technisch beliebig umgesetzt werden, sofern er eine vom Hauptantrieb zugeführte Antriebskraft in Richtung auf den Nebenstrang, insbesondere den ersten Nebenstrang und/oder den zweiten Nebenstrang, gewährleistet. Bei einer Ausführungsform der Steuerungsvorrichtung ist vorgesehen, dass der Hauptstrang eine mit dem Hauptantrieb verbundene erste Hauptantriebwelle umfasst, die an einem in der Hauptverteilereinheit angeordneten Ende einen ersten Form- und/oder Kraftschlussabschnitt umfasst.

Bei einer Weiterbildung der Steuerungsvorrichtung ist vorgesehen, dass der Hauptstrang mindestens eine zweite Hauptantriebswelle umfasst, die in der Hauptverteilereinheit einen zweiten Form- und/oder Kraftschlussabschnitt, der in den ersten Form- und/oder Kraftschlussabschnitt der ersten Hauptantriebswelle ein Umlenkgetriebe bildend eingreift, die an einem ersten Ende einen ersten Neben-Form- und/oder Kraftschlussabschnitt der im ersten Hauptverteiler-Summierungsgetriebe mit dem Hauptverteilerantriebsstrang, insbesondere ein Umlenkgetriebe bildend, gekoppelt ist, und die an einem dem ersten Enden gegenüberliegenden zweiten Ende einen zweiten Neben-Form- und/oder Kraftschlussabschnitt aufweist der im zweiten Hauptverteiler-Summierungsgetriebe mit dem Hauptverteilerantriebsstrang, insbesondere ein Umlenkgetriebe bildend, gekoppelt ist.

Hierdurch umfasst der Hauptstrang die erste Hauptantriebswelle und die zweite Hauptantriebswelle, wobei die zweite Hauptantriebswelle sowohl mit dem ersten Hauptverteiler-Summierungsgetriebe als auch mit dem zweiten Hauptverteiler-Summierungsgetriebe verbunden ist.

Alternativ hierzu sieht eine Ausführungsform der Steuerungseinrichtung vor, dass der Hauptstrang mindestens eine zweite Hauptantriebswelle umfasst, die in der Hauptverteilereinheit einen zweiten Form- und/oder Kraftschlussabschnitt, der in den ersten Form- und/oder Kraftschlussabschnitt der ersten Hauptantriebswelle ein Umlenkgetriebe bildend eingreift, und die an einem ersten Ende einen ersten Neben-Form-und/oder Kraftschlussabschnitt aufweist, der im ersten Hauptverteiler-Summierungsgetriebe mit dem Hauptverteilerantriebsstrang, insbesondere ein Umlenkgetriebe bildend, gekoppelt ist, und dass der Hauptstrang mindestens eine dritte Hauptantriebswelle umfasst, die in der Hauptverteilereinheit einen dritten-Form- und/oder Kraftschlussabschnitt, der in den ersten Form- und/oder Kraftschlussabschnitt der ersten Hauptantriebswelle ein Umlenkgetriebe bildend eingreift, und die an einem zweiten Ende einen zweiten Neben-Form- und/oder Kraftschlussabschnitt aufweist, der im zweiten Hauptverteiler-Summierungsgetriebe mit dem Hauptverteilerantriebsstrang, insbesondere ein Umlenkgetriebe bildend, gekoppelt ist.

Solchenfalls wird der Hauptstrang, insbesondere die erste Hauptantriebswelle, mit zwei weiteren Hauptantriebswellen gekoppelt, nämlich der zweiten Hauptantriebswelle und der dritten Hauptantriebswelle. Hierbei ist die zweite Hauptantriebswelle dem ersten Hauptverteiler-Summierungsgetriebe und die zweite Hauptantriebswelle dem zweiten Hauptverteiler-Summierungsgetriebe zugeordnet.

Auch die technische Ausgestaltung des ersten Nebenstrangs kann beliebig erfolgen, sofern die durch den Hauptantrieb über den Hauptstrang auf den ersten Nebenstrang übertragene Kraft an den ersten Abnehmer und/oder an den zweiten Abnehmer übertragbar ist. Es erweist sich als vorteilhaft, wenn der erste Nebenstrang eine mit der Hauptverteilereinheit verbundene erste erste Nebenwelle umfasst, die an einem in der ersten Nebenverteilereinheit angeordneten Ende einen ersten Form- und/oder Kraftschlussabschnitt umfasst.

Darüber hinaus sieht eine Ausführungsform der Steuerungsvorrichtung vor, dass der erste Nebenstrang mindestens eine zweite erste Nebenwelle umfasst, die in der ersten Nebenverteilereinheit einen zweiten-Form-und/oder Kraftschlussabschnitt, der in den ersten Form- und/oder Kraftschlussabschnitt der ersten ersten Nebenwelle, insbesondere ein Umlenkgetriebe bildend, eingreift, die an einem ersten Ende einen ersten Abtriebs-Form- und/oder Kraftschlussabschnitt, der im ersten Summierungsgetriebe mit dem ersten Nebenantriebsstrang, insbesondere ein Umlenkgetriebe bildend, gekoppelt ist, und die an einem dem ersten Ende gegenüberliegenden zweiten Ende einen zweiten Abtriebs-Form-und/oder Kraftschlussabschnitt aufweist, der im zweiten Summierungsgetriebe mit dem ersten Nebenantriebsstrang, insbesondere ein Umlenkgetriebe bildend, gekoppelt ist.

Solchenfalls umfasst der erste Nebenstrang ausschließlich eine erste Nebenwelle und eine zweite Nebenwelle, wobei die zweite Nebenwelle sowohl im ersten Summierungsgetriebe als auch im zweiten Summierungsgetriebe eine Eingangsseite bildet. Entsprechend ist der Drehsinn des ersten Nebenstrangs am ersten Summierungsgetriebe und am zweiten Summierungsgetriebe der gleiche.

Alternativ hierzu sieht eine Weiterbildung der Steuerungsvorrichtung vor, dass der erste Nebenstrang mindestens eine zweite erste Nebenwelle umfasst, die in der ersten Nebenverteilereinheit einen zweiten Form-und/oder Kraftschlussabschnitt, der in den ersten Form- und/oder Kraftschlussabschnitt des ersten Nebenstrang ein Umlenkgetriebe bildend eingreift, und die an einem ersten Ende einen ersten Abtriebs-Form-und/oder Kraftschlussabschnitt der im ersten Summierungsgetriebe mit dem ersten Nebenantriebsstrang, insbesondere ein Umlenkgetriebe bildend, gekoppelt ist, und dass der erste Nebenstrang mindestens eine dritte erste Nebenwelle umfasst, die in der ersten Nebenverteilereinheit einen dritten-Form- und/oder Kraftschlussabschnitt, der in den ersten Form- und/oder Kraftschlussabschnitt der ersten ersten Nebenwelle, insbesondere ein Umlenkgetriebe bildend, eingreift, und die an einem zweiten Ende einen zweiten Abtriebs-Form- und/oder Kraftschlussabschnitt umfasst, der im zweiten Summierungsgetriebe mit dem ersten Nebenantriebsstrang, insbesondere ein Umlenkgetriebe bildend, eingreift.

Durch das Vorsehen einer zweiten ersten Nebenwelle und einer dritten ersten Nebenwelle, sind dem ersten Summierungsgetriebe und dem zweiten Summierungsgetriebe eigene erste Nebenwellen zuführbar. Hierdurch kann ein unterschiedlicher Drehsinn eingangsseitig des ersten Summierungsgetriebes bezüglich des zweiten Summierungsgetriebes eingestellt werden.

Auch der zweite Nebenstrang kann technisch beliebig ausgebildet sein, sofern die durch den Hauptantrieb übertragene Kraft am dritten Abnehmer und/oder am vierten Abnehmer übertragen wird.

Es erweist sich als vorteilhaft, wenn der zweite Nebenstrang eine mit der Hauptverteilereinheit verbundene erste zweite Nebenwelle umfasst, die an einem in der zweiten Nebenverteilereinheit angeordneten Ende einen ersten Form- und/oder Kraftschlussabschnitt umfasst.

Bei einer Weiterbildung erweist es sich als vorteilhaft, wenn der zweite Nebenstrang mindestens eine zweite zweite Nebenwelle umfasst, die in der zweiten Nebenverteilereinheit einen zweiten-Form- und/oder Kraftschlussabschnitt, der in den ersten Form- und/oder Kraftschlussabschnitt der ersten zweiten Nebenwelle, insbesondere ein Umlenkgetriebe bildend, eingreift, die an einem ersten Ende einen dritten Abtriebs-Form- und/oder Kraftschlussabschnitt der im dritten Summierungsgetriebe mit dem zweiten Nebenantriebsstrang, insbesondere ein Umlenkgetriebe bildend, gekoppelt ist, und die an einem dem ersten Enden gegenüberliegenden zweiten Ende einen vierten Abtriebs-Form-und/oder Kraftschlussabschnitt umfasst, der im vierten Summierungsgetriebe mit dem zweiten Nebenantriebsstrang, insbesondere ein Umlenkgetriebe bildend, gekoppelt ist.

Hierdurch können durch die zweite zweite Nebenwelle, die sowohl eingangsseitig am dritten Summierungsgetriebe als auch am vierten Summierungsgetriebe einläuft, der gleiche Drehsinn eingestellt werden.

Zum Ermöglichen eines unterschiedlichen Drehsinns am dritten Summierungsgetriebe und am vierten Summierungsgetriebe, sieht eine alternative Ausführungsform der Steuerungsvorrichtung vor, dass der zweite Nebenstrang mindestens eine zweite zweite Nebenwelle umfasst, die in der zweiten Nebenverteilereinheit einen zweiten Form- und/oder Kraftschlussabschnitt, der in den ersten Form- und/oder Kraftschlussabschnitt des zweiten Nebenstrang ein Umlenkgetriebe bildend eingreift, und die an einem ersten Ende einen ersten zweiten Abtriebs-Form-und/oder Kraftschlussabschnitt umfasst, der im dritten Summierungsgetriebe mit dem zweiten Nebenantriebsstrang, insbesondere ein Umlenkgetriebe bildend, gekoppelt ist, und dass der zweite Nebenstrang mindestens eine dritte erste Nebenwelle umfasst, die in der zweiten Nebenverteilereinheit einen dritten-Form- und/oder Kraftschlussabschnitt, der in den ersten Form-und/oder Kraftschlussabschnitt der ersten zweiten Nebenwelle, insbesondere ein Umlenkgetriebe bildend, eingreift, und die an einem zweiten Ende einen zweiten zweiten Abtriebs-Form- und/oder Kraftschlussabschnitt umfasst, der im vierten Summierungsgetriebe mit dem zweiten Nebenantriebsstrang, insbesondere ein Umlenkgetriebe bildend, eingreift.

Darüber hinaus kann auch der Hauptverteilerantriebsstrang beliebig ausgebildet sein, sofern er der technischen Funktion nachkommt, den Hauptverteilerantrieb mit dem ersten Hauptverteiler-Summierungsgetriebe und/oder dem zweiten Hauptverteiler-Summierungsgetriebe zu koppeln.

Es erweist sich als vorteilhaft, wenn der Hauptverteilerantriebsstrang eine mit dem Hauptverteilerantrieb verbundene erste Hauptverteilerantriebswelle umfasst, die an einem in der Hauptverteilereinheit angeordneten Ende einen ersten Form- und/oder Kraftschlussabschnitt umfasst.

Wenn sowohl am ersten Hauptverteiler-Summierungsgetriebe als auch am zweiten Hauptverteiler-Summierungsgetriebe der gleiche Drehsinn vorherrschen soll, erweist es sich als vorteilhaft, wenn der Hauptverteilerantriebsstrang mindestens eine zweite Hauptverteilerantriebswelle umfasst, die in der Hauptverteilereinheit einen zweiten Form- und/oder Kraftschlussabschnitt, der in den ersten Form-und/oder Kraftschlussabschnitt der ersten Hauptverteilerantriebwelle ein Umlenkgetriebe bildend eingreift, die an einem ersten Ende einen ersten Neben-Form- und/oder Kraftschlussabschnitt, der im ersten Hauptverteiler-Summierungsgetriebe mit dem Hauptantriebsstrang, insbesondere ein Umlenkgetriebe bildend, gekoppelt ist, und die an einem dem ersten Ende gegenüberliegenden zweiten Ende einen zweiten Neben-Form- und/oder Kraftschlussabschnitt umfasst, der im zweiten Hauptverteiler-Summierungsgetriebe mit dem Hauptstrang, insbesondere ein Umlenkgetriebe bildend, gekoppelt ist.

Wenn am ersten Hauptverteiler-Summierungsgetriebe und am zweiten Hauptverteiler-Summierungsgetriebe ein unterschiedlicher Drehsinn einstellbar sein soll, erweist es sich als vorteilhaft, wenn der Hauptverteilerantriebsstrang mindestens eine zweite Hauptverteilerantriebswelle umfasst, die in der Hauptverteilereinheit einen zweiten Form- und/oder Kraftschlussabschnitt, der in den ersten Form-und/oder Kraftschlussabschnitt der ersten Hauptverteilerantriebwelle ein Umlenkgetriebe bildend eingreift, und die an einem ersten Ende einen ersten Neben-Form- und/oder Kraftschlussabschnitt umfasst, der im ersten Hauptverteiler-Summierungsgetriebe mit dem Hauptantriebsstrang, insbesondere ein Umlenkgetriebe bildend, gekoppelt ist, und dass der Hauptverteilerantriebsstrang mindestens eine dritte Hauptverteilerantriebwelle umfasst, die in der Hauptverteilereinheit einen dritten-Form- und/oder Kraftschlussabschnitt, der in den ersten Form-und/oder Kraftschlussabschnitt der ersten Hauptverteilerantriebwelle ein Umlenkgetriebe bildend eingreift, und die an einem zweiten Ende einen zweiten Neben-Form- und/oder Kraftschlussabschnitt umfasst, der im zweiten Hauptverteiler-Summierungsgetriebe mit dem Hauptstrang, insbesondere ein Umlenkgetriebe bildend, gekoppelt ist.

Darüber hinaus erweist es sich bei einer Ausführungsform der Steuerungsvorrichtung als vorteilhaft, wenn der erste Nebenantriebsstrang eine mit dem ersten Nebenverteilerantrieb verbundene erste erste Nebenantriebswelle umfasst, die an einem in der ersten Nebenverteilereinheit angeordneten Ende einen ersten Form- und/oder Kraftschlussabschnitt umfasst.

Der Drehsinn an dem ersten Summierungsgetriebe und an dem zweiten Summierungsgetriebe kann gleich sein, wenn der erste Nebenantriebsstrang mindestens eine zweite erste Nebenantriebswelle umfasst, die in der ersten Nebenverteilereinheit einen zweiten Form- und/oder Kraftschlussabschnitt, der in den ersten Form- und/oder Kraftschlussabschnitt der ersten ersten Nebenverteilerantriebwelle ein Umlenkgetriebe bildend eingreift, die an einem ersten Ende einen Form- und/oder Kraftschlussabschnitt umfasst, der im ersten Summierungsgetriebe mit dem ersten Nebenstrang, insbesondere ein Umlenkgetriebe bildend, gekoppelt ist, und die an einem zweiten Ende einen Form- und/oder Kraftschlussabschnitt umfasst, der im zweiten Summierungsgetriebe mit dem ersten Nebenstrang, insbesondere ein Umlenkgetriebe bildend, gekoppelt ist.

Alternativ hierzu kann der Drehsinn am ersten Summierungsgetriebe vom Drehsinn des zweiten Summierungsgetriebes abweichen, wenn der erste Nebenantriebsstrang mindestens eine zweite erste Nebenantriebswelle umfasst, die in der ersten Nebenverteilereinheit einen zweiten Form-und/oder Kraftschlussabschnitt, der in den ersten Form- und/oder Kraftschlussabschnitt der ersten ersten Nebenverteilerantriebwelle ein Umlenkgetriebe bildend eingreift, und die an einem ersten Ende einen Form-und/oder Kraftschlussabschnitt umfasst, der im ersten Summierungsgetriebe mit dem ersten Nebenstrang, insbesondere ein Umlenkgetriebe bildend, gekoppelt ist, und wenn der erste Nebenantriebsstrang mindestens eine dritte erste Nebenantriebswelle umfasst, die in der ersten Nebenverteilereinheit einen dritten-Form- und/oder Kraftschlussabschnitt, der in den ersten Form- und/oder Kraftschlussabschnitt der ersten ersten Nebenverteilerantriebwelle ein Umlenkgetriebe bildend eingreift, und die an einem zweiten Ende einen Form- und/oder Kraftschlussabschnitt umfasst, der im zweiten Summierungsgetriebe mit dem ersten Nebenstrang, insbesondere ein Umlenkgetriebe bildend, gekoppelt ist.

Bei Ausführungsformen der Steuerungsvorrichtung ist vorgesehen, dass der zweite Nebenantriebsstrang eine mit dem zweiten Nebenverteilerantrieb verbundene erste zweite Nebenantriebswelle umfasst, die an einem in der zweiten Nebenverteilereinheit angeordneten Ende einen ersten Form-und/oder Kraftschlussabschnitt umfasst.

Um am dritten Summierungsgetriebe und am vierten Summierungsgetriebe den gleichen Drehsinn zu umfassen, erweist es sich als vorteilhaft, wenn der zweite Nebenantriebsstrang mindestens eine zweite zweite Nebenantriebswelle umfasst, die in der zweiten Nebenverteilereinheit einen zweiten Form- und/oder Kraftschlussabschnitt, der in den ersten Form-und/oder Kraftschlussabschnitt der ersten zweiten Nebenverteilerantriebwelle ein Umlenkgetriebe bildend eingreift, die an einem ersten Ende einen Form-und/oder Kraftschlussabschnitt umfasst, der im dritten Summierungsgetriebe mit dem zweiten Nebenstrang, insbesondere ein Umlenkgetriebe bildend, gekoppelt ist, und die an einem zweiten Ende einen Form- und/oder Kraftschlussabschnitt umfasst, der im vierten Summierungsgetriebe mit dem zweiten Nebenstrang, insbesondere ein Umlenkgetriebe bildend, gekoppelt ist.

Um am dritten Summierungsgetriebe und am vierten Summierungsgetriebe einen gegenläufigen Drehsinn des zweiten Nebenverteilerantriebsstrangs einzustellen, erweist es sich als vorteilhaft, wenn der zweite Nebenantriebsstrang mindestens eine zweite zweite Nebenantriebswelle umfasst, die in der zweiten Nebenverteilereinheit einen zweiten Form-und/oder Kraftschlussabschnitt, der in den ersten Form- und/oder Kraftschlussabschnitt der ersten zweiten Nebenverteilerantriebwelle ein Umlenkgetriebe bildend eingreift, und die an einem ersten Ende einen Form-und/oder Kraftschlussabschnitt umfasst, der im dritten Summierungsgetriebe mit dem zweiten Nebenstrang, insbesondere ein Umlenkgetriebe bildend, gekoppelt ist, und wenn der zweite Nebenantriebsstrang mindestens eine dritte zweite Nebenantriebswelle umfasst, die in der ersten Nebenverteilereinheit einen dritten-Form- und/oder Kraftschlussabschnitt, der in den ersten Form- und/oder Kraftschlussabschnitt der ersten zweiten Nebenverteilerantriebwelle ein Umlenkgetriebe bildend eingreift, die an einem zweiten Ende einen Form- und/oder Kraftschlussabschnitt umfasst, der im vierten Summierungsgetriebe mit dem zweiten Nebenstrang, insbesondere ein Umlenkgetriebe bildend, gekoppelt ist.

Die Form- und Kraftschlussabschnitte können einen Zahnradabschnitt, einen Stirnradabschnitt oder Dergleichen, umfassen.

Es erweist sich als vorteilhaft, wenn der erste Abnehmer, der zweite Abnehmer, der dritte Abnehmer und/oder der vierte Abnehmer eine Seileinzugs- und/oder Seilauslassvorrichtung, eine Seilkraftverstärkung und/oder einen Seilspeicher, umfasst.

Hierdurch bilden die Abnehmer mittelbar oder unmittelbar zum Steuern des Windsammelmittels einziehbare oder auslassbare Seile oder Leinen.

Dadurch, dass jedem Abnehmer mindestens ein Summierungsgetriebe vorgeschaltet ist, ist jeder Abnehmer mit einer unterschiedlichen Drehgeschwindigkeit betreibbar. Hierdurch können die unterschiedlichen Seile oder Leinen mit der gleichen oder mit abweichender Geschwindigkeit betrieben werden. Darüber hinaus ist es auch denkbar, dass alle Abnehmer oder zumindest zwei Abnehmer, mit derselben Geschwindigkeit ausgelassen werden oder eingezogen werden.

Darüber hinaus erweist es sich als vorteilhaft, wenn Hauptantrieb, Hauptverteilerantrieb, erster Nebenantrieb und/oder zweiter Nebenantrieb elektrisch, magnetisch, elektromagnetisch, mechanisch, pneumatisch und/oder hydraulisch betreibbar ist.

Wenn einer der Antriebe, insbesondere der Hauptantrieb, der Hauptverteilerantrieb, der erste Nebenantrieb und/oder der zweite Nebenantrieb mechanisch betrieben werden, ist hierunter zu verstehen, ein Betreiben mittels Brennkraft und/oder ein Betreiben mittels manueller Kraft.

Unter einer manuellen Kraft kann beispielsweise eine Muskelkraft verstanden werden, die von einem Benutzer des Kites aufgebracht wird.

Darüber hinaus kann es sich als vorteilhaft erweisen, wenn Hauptantrieb, Hauptverteilerantrieb, erster Nebenantrieb und/oder zweiter Nebenantrieb einen elektrischen Generator, insbesondere einen Reluktanzmotor umfasst.

Solchenfalls ist es beispielsweise denkbar, über die unterschiedlichen Abnehmer Seile einzuziehen oder auszulassen und hierbei die über die Summierungsgetriebe verbundenen Antriebe, insbesondere Hauptantrieb, Hauptverteilerantrieb, erster Nebenantrieb und/oder zweiter Nebenantrieb, durch das jeweilige Auslassen zu betreiben und hierdurch elektrische Energie zu erzeugen. Solchenfalls sind die Antriebe auch mittels Rekuperation zu betreiben. Die Antriebe, insbesondere der Hauptantrieb, der Hauptverteilerantrieb, der erste Nebenantrieb und/oder der zweite Nebenantrieb, können eine Bremse, insbesondere eine Motorbremse, aufweisen und/oder eine Feststellbremse, insbesondere in Form einer Schnecke, umfassen.

Darüber hinaus sind Ausführungsformen denkbar, bei denen die Antriebe in die unterschiedlichen Stränge ein- und/oder ausgekuppelt werden.

Beim rekuperierenden Betrieb können die Antriebe jeweils als Bremse tätig sein.

Schließlich erweist es sich als vorteilhaft, wenn der Hauptantrieb, der Hauptverteilerantrieb, der erste Nebenantrieb und/oder der zweite Nebenantrieb jeweils einen einzigen Antrieb umfasst oder durch mehrere Antriebe gebildet ist, die insbesondere durch einen Getriebekranz miteinander gekoppelt sind.

Solchenfalls können sich die einzelnen Antriebe, insbesondere der Hauptantrieb, der Hauptverteilerantrieb, der erste Nebenantrieb und/oder der zweite Nebenantrieb, aus mehreren Antrieben zusammensetzen. Diese können beispielsweise einen Getriebekranz bilden. Darüber hinaus ist es denkbar, dass solchenfalls ein Generator als zusätzliches Bauteil, mit einkoppelbar ist.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Steuerungsvorrichtung.

In der Zeichnung zeigt:
- Figur 1: Eine schematische Draufsicht auf ein Ausführungsbeispiel der Steuerungsvorrichtung;
- Figur 2: Eine Detailansicht der Steuerungsvorrichtung gemäß Figur 1;
- Figur 3: Eine Detailansicht gemäß Figur 2 mit einem zweiten Ausführungsbeispiel der Steuerungsvorrichtung;
- Figur 4: Eine perspektivische Detailansicht eines Summierungsgetriebes einer Nebenverteilereinheit.

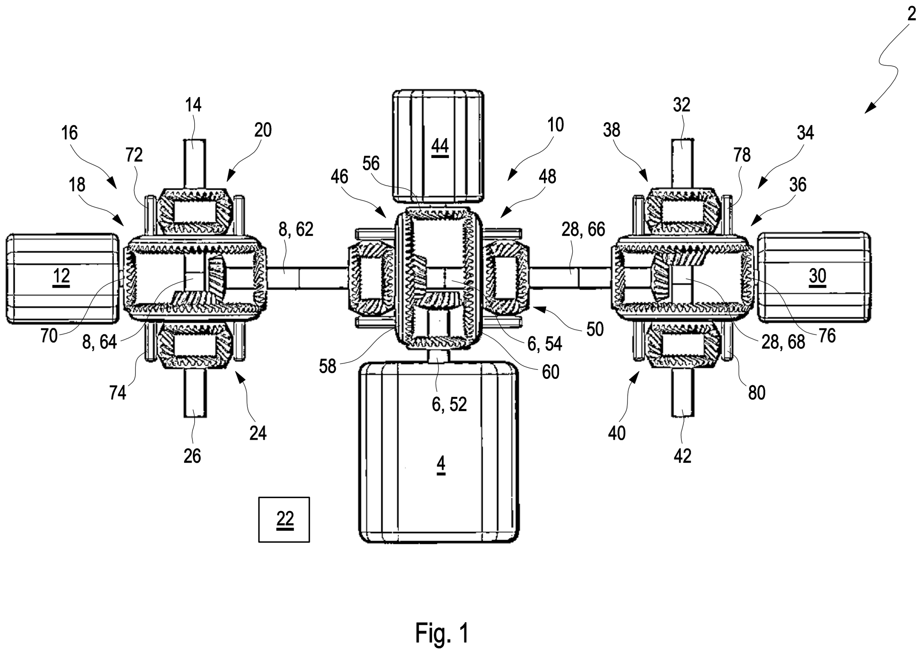

Figur 1 zeigt ein Ausführungsbeispiel einer insgesamt mit dem Bezugszeichen 2 versehenen Steuerungsvorrichtung für ein flächenhaftes Windsammelmittel (in den Figuren nicht dargestellt). Das Windsammelmittel kann ein Flugkörper, ein Profil, ein Segel oder ein Kite umfassen.

Die Steuerungsvorrichtung 2 umfasst einen Hauptantrieb 4 und einen mit dem Hauptantrieb 4 kraftübertragend verbundenen Hauptstrang 6.

Darüber hinaus umfasst die Steuerungsvorrichtung 2 einen ersten Nebenstrang 8, eine Hauptverteilereinheit 10, durch die der Hauptstrang 6 zumindest mit dem ersten Nebenstrang 8 gekoppelt ist, mindestens einen ersten Nebenantrieb 12, einen ersten Abtriebsstrang 14, für mindestens einen ersten Abnehmer einer ersten Nebenverteilereinheit 16, in der der erste Nebenstrang 8 und ein mit dem ersten Nebenantrieb 12 kraftübertragend verbundener erster Nebenantriebsstrang 18 ein erstes Summierungsgetriebe 20 bilden. An dem Getriebe-Ausgang des ersten Summierungsgetriebes 20 ist der erste Abtriebsstrang 14 gekoppelt.

Darüber hinaus umfasst die Steuerungsvorrichtung 2 eine Steuereinheit 22, durch die der Hauptantrieb 4 und/oder der erste Nebenantrieb 12 jeweils aktiv und/oder inaktiv schaltbar sind und durch die zumindest Drehzahl und Drehrichtung des Hauptantriebs 4 und/oder Drehzahl und Drehrichtung des ersten Nebenantriebs 12 einstellbar sind.

Bei dem in Figur 1 gezeigten Ausführungsbeispiel umfasst die erste Nebenverteilereinheit 16 zusätzlich ein zweites Summierungsgetriebe 24, an dessen Getriebe-Ausgang ein zweiter Abtriebsstrang 26 gekoppelt ist. Über den ersten Abtriebsstrang 14 und den zweiten Abtriebsstrang 26 ist ein erster Abnehmer und ein zweiter Abnehmer eingekoppelt, der beispielsweise ein Seil oder eine Leine umfassen kann.

Darüber hinaus umfasst das Ausführungsbeispiel gemäß Figur 1 der Steuerungsvorrichtung 2 einen zweiten Nebenstrang 28, der in der Hauptverteilereinheit 10 mit dem Hauptstrang 6 gekoppelt ist.

Darüber hinaus umfasst die Steuerungsvorrichtung 2 einen zweiten Nebenantrieb 30, einen dritten Abtriebsstrang 32 für einen dritten Abnehmer, eine zweite Nebenverteilereinheit 34, in der der zweite Nebenstrang 28 und ein mit dem zweiten Nebenantrieb 30 kraftübertragend verbundener zweiter Nebenantriebsstrang 36, ein drittes Summierungsgetriebe 38 bilden. Der Getriebe-Ausgang des dritten Summierungsgetriebes 38 ist mit dem dritten Antriebsstrang 32 gekoppelt.

Der zweite Nebenantrieb 30 ist durch die Steuereinheit 22 unabhängig vom Hauptantrieb 4 und vom ersten Nebenantrieb 12 aktiv und/oder inaktiv schaltbar sowie die Drehzahl und Drehrichtung des zweiten Nebenantriebs 30 einstellbar.

Bei dem in Figur 1 ersichtlichen Ausführungsbeispiel umfasst die zweite Nebenverteilereinheit 34 ein viertes Summierungsgetriebe 40, an dessen Getriebe-Ausgang ein vierter Abtriebsstrang 42 gekoppelt ist, der mit einem vierten Abnehmer verbunden ist.

Darüber hinaus umfasst die Steuerungsvorrichtung 2 einen Hauptverteilerantrieb 44, der der Hauptverteilereinheit 10 zugeordnet ist und durch den ein erstes Hauptverteiler-Summierungsgetriebe 46, das durch den Hauptstrang 6 und durch einen mit dem Hauptverteilerantrieb 44 kraftübertragend verbundenen Hauptverteilerantriebsstrang 48 gebildet ist, dessen Getriebe-Ausgang mit dem ersten Nebenstrang 8 gekoppelt ist. Durch die Steuereinheit 22 ist der Hauptverteilerantrieb 44 unabhängig von den anderen Antrieben aktiv und/oder inaktiv schaltbar sowie die Drehzahl und Drehrichtung des Hauptverteilerantriebs 44 einstellbar.

Bei dem in Figur 1 gezeigten Ausführungsbeispiel der Steuerungsvorrichtung 2 umfasst die Hauptverteilereinheit 10 ein zweites Hauptverteiler-Summierungsgetriebe 50, das durch den Hauptstrang 6 und den Hauptverteilerantriebsstrang 48 gebildet ist und dessen Getriebe-Ausgang mit dem zweiten Nebenstrang 28 gekoppelt ist.

Im Folgenden wird auf den konkret in Figur 1 dargestellten Aufbau der Steuerungsvorrichtung 2 eingegangen:
Der Hauptstrang 6 umfasst eine mit dem Hauptantrieb 4 verbundene erste Hauptantriebswelle 52. Diese ist über einen Form- und/oder Kraftschlussabschnitt mit einer zweiten Hauptantriebswelle 54 des Hauptstrangs 6 verbunden. Die zweite Hauptantriebswelle umfasst an ihren beiden einander gegenüberliegenden Enden jeweils einen Form- und/oder Kraftschlussabschnitt, mit dem die zweite Hauptantriebswelle 54 eingangsseitig mit dem ersten Hauptverteiler-Summierungsgetriebe 46 und mit dem zweiten Hauptverteiler-Summierungsgetriebe 50 verbunden ist. Bei dem in den Figuren gezeigten Ausführungsbeispielen ist hierbei die zweite Hauptantriebswelle 54 auf beiden Seiten jeweils durch eine Komponente des Hauptverteilerantriebsstrangs 48 durcherstreckt, wobei jeweils auf den der ersten Nebenverteilereinheit 16, bzw. auf der der zweiten Nebenverteilereinheit 34 zugewandten Seite der jeweilige Form- und/oder Kraftschlussabschnitt angeordnet und mit dem ersten Hauptverteiler-Summierungsgetriebe 46, bzw. mit dem zweiten Hauptverteiler-Summierungsgetriebe 50 eingangsseitig eingekoppelt ist.

Das Wort "beziehungsweise" wird vorliegend nicht als "oder" verstanden, sondern dem ursprünglichen Wortsinn nach als "und im anderen Fall".

Darüber hinaus umfasst der Hauptverteilerantriebsstrang 48 eine mit dem Hauptverteilerantrieb 44 verbundene erste Hauptverteilerantriebswelle 56, eine über einen Form- und/oder Kraftschlussabschnitt mit der ersten Hauptverteilerantriebswelle 56 eingekoppelten zweiten Hauptverteilerantriebswelle 58, die zusammen mit der zweiten Hauptantriebswelle 54 eingangsseitig das erste Hauptverteiler-Summierungsgetriebe 46 bildet sowie eine dritte Hauptverteilerantriebswelle 60, die mit der zweiten Hauptantriebswelle 54 eingangsseitig das zweite Hauptverteiler-Summierungsgetriebe 50 bildet.

Der erste Nebenstrang 8 umfasst eine mit der Hauptverteilereinheit 10 verbundene erste erste Nebenwelle 62 und eine mit der ersten ersten Nebenwelle 62 über einen Form- und/oder Kraftschlussabschnitt verbundene zweite erste Nebenwelle 64. Diese ist über ihre beiden einander gegenüberliegenden Enden mit jeweils einem Form- und/oder Kraftschlussabschnitt in das erste Summierungsgetriebe 20, bzw. in das zweite Summierungsgetriebe 24 eingekoppelt.

Entsprechend umfasst der zweite Nebenstrang 28 eine mit der Hauptverteilereinheit 10 verbundene erste zweite Nebenwelle 66 sowie eine über einen Form- und/oder Kraftschlussabschnitt mit der ersten zweiten Nebenwelle 66 verbundene zweite zweite Nebenwelle 68. An der zweiten zweiten Nebenwelle 68 ist an deren jeweils aneinander gegenüberliegenden Enden die zweite zweite Nebenwelle 68 über jeweils einen Form- und/oder Kraftschlussabschnitt in das dritte Summierungsgetriebe 38, bzw. in das vierte Summierungsgetriebe 40 eingangsseitig eingekoppelt.

Der erste Nebenantriebsstrang 18 umfasst eine erste erste Nebenantriebswelle 70 sowie eine zweite erste Nebenantriebswelle 72, die in das erste Summierungsgetriebe 20 eingekoppelt ist und eine dritte Nebenantriebswelle 74, die in das zweite Summierungsgetriebe 24 eingekuppelt ist.

Der zweite Nebenantriebsstrang 36 umfasst eine erste zweite Nebenantriebswelle 76, die über einen Form- und/oder Kraftschlussabschnitt mit einer zweiten zweiten Nebenantriebswelle 78, die in das dritte Summierungsgetriebe 38 eingekoppelt ist und eine dritte zweite Nebenantriebswelle 80, die in das vierte Summierungsgetriebe 40 eingekoppelt ist.

Bei dem in den Figuren gezeigten Ausführungsbeispiel ist der erste Nebenstrang 8 sowohl am ersten Summierungsgetriebe 20 als auch am zweiten Summierungsgetriebe 24 mit dem gleichen Drehsinn eingangsseitig eingekoppelt. Der erste Nebenantriebsstrang 18 ist durch die Verwendung von drei Nebenantriebswellen 70, 72, 74 mit unterschiedlichen Drehrichtungen am ersten Summierungsgetriebe 20 abweichend von der Drehrichtung zum zweiten Summierungsgetriebe 24 eingekoppelt.

Dieses gilt in gleicher Weise für den zweiten Nebenstrang 28 und den zweiten Nebenantriebsstrang 36.

Durch den Aufbau an der Hauptverteilereinheit 10 herrscht am Hauptstrang 6, insbesondere an der zweiten Hauptantriebswelle 54, sowohl am ersten Hauptverteiler-Summierungsgetriebe 46 als auch am zweiten Hauptverteiler-Summierungsgetriebe 50 eingangsseitig die gleiche Drehrichtung.

Durch den Aufbau des Hauptverteilerantriebs 44 mit drei Hauptverteilerantriebswellen 56, 58 und 60, weichen die Drehrichtungen des Hauptverteilerantriebsstrangs 48 am ersten Hauptverteiler-Summierungsgetriebe 46 von der Drehrichtung am zweiten Hauptverteiler-Summierungsgetriebe 50 ab.

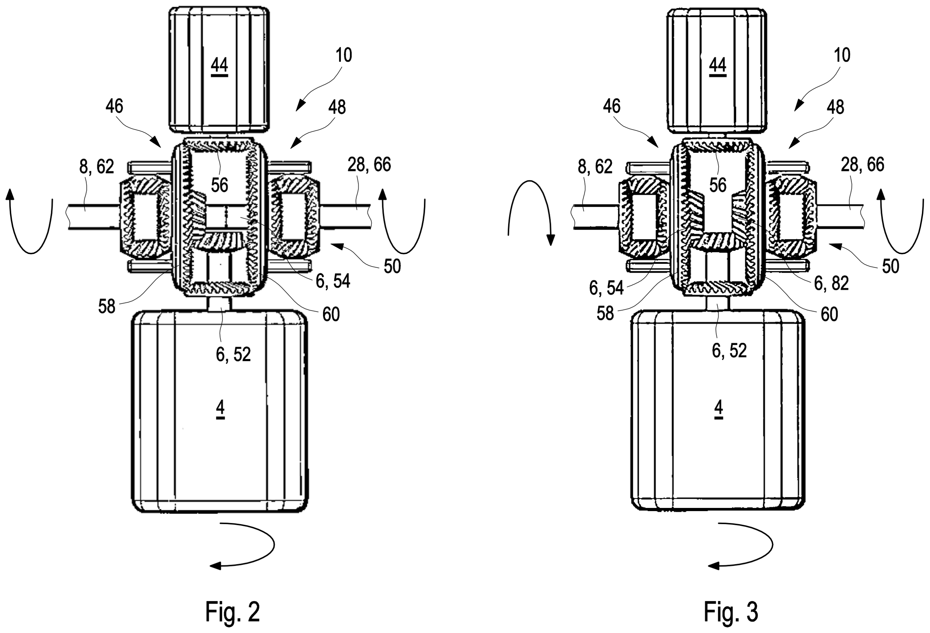

Figur 2 zeigt eine Detailansicht der Hauptverteilereinheit 10 gemäß Aufbau nach Figur 1. Hierbei wird ersichtlich, dass die über das erste Hauptverteiler-Summierungsgetriebe 46 auf den ersten Nebenstrang 8 übertragene Drehrichtung, der auf den zweiten Nebenstrang 28 übertragenen Drehrichtung durch das zweite Hauptverteiler-Summierungsgetriebe 50 entspricht.

Figur 3 zeigt eine zweite Ausführungsform der Steuerungsvorrichtung 2, bei der der Hauptstrang 6 eine dritte Hauptantriebswelle 82 umfasst. Hierdurch umfasst der Hauptstrang 6 eingangsseitig am ersten Hauptverteiler-Summierungsgetriebe 46 einen anderen Drehsinn als am zweiten Hauptverteiler-Summierungsgetriebe 50.

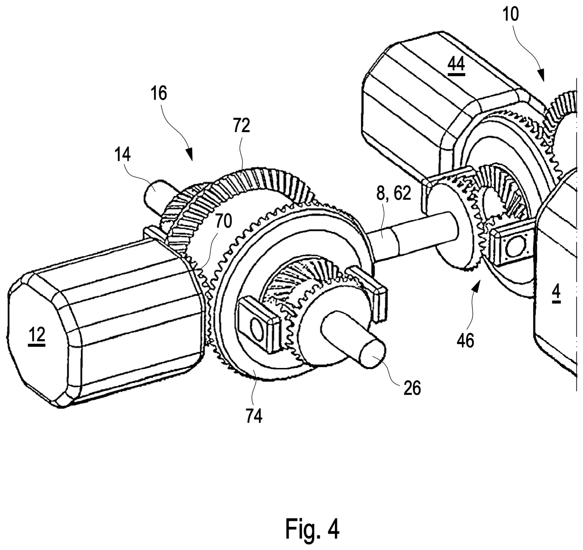

Figur 4 zeigt eine perspektivische Detailansicht auf das zweite Summierungsgetriebe 24 in der ersten Nebenverteilereinheit 16.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Steuerungsvorrichtung
- 4: Hauptantrieb
- 6: Hauptstrang
- 8: erster Nebenstrang
- 10: Hauptverteilereinheit
- 12: erster Nebenantrieb
- 14: erster Abtriebsstrang
- 16: erste Nebenverteilereinheit
- 18: erster Nebenantriebsstrang
- 20: erstes Summierungsgetriebe
- 22: Steuereinheit
- 24: zweites Summierungsgetriebe
- 26: zweiter Abtriebsstrang
- 28: zweiter Nebenstrang
- 30: zweiter Nebenantrieb
- 32: dritter Abtriebsstrang
- 34: zweite Nebenverteilereinheit
- 36: zweiter Nebenantriebsstrang
- 38: drittes Summierungsgetriebe
- 40: viertes Summierungsgetriebe
- 42: vierter Abtriebsstrang
- 44: Hauptverteilerantrieb
- 46: erstes Hauptverteiler-Summierungsgetriebe
- 48: Hauptverteilerantriebsstrang
- 50: zweites Hauptverteiler-Summierungsgetriebe
- 52: erste Hauptantriebswelle
- 54: zweite Hauptantriebswelle
- 56: erste Hauptverteilerantriebswelle
- 58: zweite Hauptverteilerantriebswelle
- 60: dritte Hauptverteilerantriebswelle
- 62: erste erste Nebenwelle
- 64: zweite erste Nebenwelle
- 66: erste zweite Nebenwelle
- 68: zweite zweite Nebenwelle
- 70: erste erste Nebenantriebswelle
- 72: zweite erste Nebenantriebswelle
- 74: dritte erste Nebenantriebswelle
- 76: erste zweite Nebenantriebswelle
- 78: zweite zweite Nebenantriebswelle
- 80: dritte zweite Nebenantriebswelle
- 82: dritte Hauptantriebswelle

## Patentansprüche

1. Steuerungsvorrichtung (2) für ein flächenhaftes Windsammelmittel, wie Flugkörper, Profil, Segel oder Kite, mit mindestens einem Hauptantrieb (4), mit mindestens einem mit dem Hauptantrieb (4) kraftübertragend verbundenen Hauptstrang (6), mit mindestens einem ersten Nebenstrang (8), mit mindestens einer Hauptverteilereinheit (10), durch die der Hauptstrang (6) zumindest mit dem ersten Nebenstrang (8) gekoppelt ist, mit mindestens einem ersten Nebenantrieb (12), mit mindestens einem ersten Abtriebsstrang (14) für mindestens einen ersten Abnehmer, mit mindestens einer ersten Nebenverteilereinheit (16), in der der erste Nebenstrang (8) und ein mit dem ersten Nebenantrieb (12) kraftübertragend verbundener erster Nebenantriebsstrang (18) ein erstes Summierungsgetriebe (20) bilden, dessen Getriebe-Ausgang mit dem ersten Abtriebsstrang (14) gekoppelt ist, und mit mindestens einer Steuereinheit (22) durch die der Hauptantrieb (4) und/oder der erste Nebenantrieb (12) jeweils aktiv und/oder inaktiv schaltbar sind und durch die zumindest Drehzahl und Drehrichtung des Hauptantriebs (4) und/oder Drehzahl und Drehrichtung des ersten Nebenantriebs (12) einstellbar sind.

2. Steuerungsvorrichtung (2) nach Anspruch 1, **gekennzeichnet durch** mindestens einen zweiten Abtriebsstrang (26) für mindestens einen zweiten Abnehmer, der in oder an der ersten Nebenverteilereinheit (16) angeordnet ist, wobei in der ersten Nebenverteilereinheit (16) der erste Nebenstrang (8) und der erste Nebenantriebsstrang (18) ein zweites Summierungsgetriebe (24) bilden, dessen Getriebe-Ausgang mit dem zweiten Abtriebsstrang (26) gekoppelt ist.

3. Steuerungsvorrichtung (2) nach Anspruch 2, **dadurch gekennzeichnet, dass** der erste Nebenstrang (8) am ersten Summierungsgetriebe (20) der ersten Nebenverteilereinheit (16) und am zweiten Summierungsgetriebe (24) der ersten Nebenverteilereinheit (16) eingangsseitig die gleiche Drehrichtung oder voneinander abweichende Drehrichtungen umfasst und/oder dass der erste Nebenantriebsstrang (18) am ersten Summierungsgetriebe (20) der ersten Nebenverteilereinheit (16) und am zweiten Summierungsgetriebe (24) der ersten Nebenverteilereinheit (16) eingangsseitig die gleiche Drehrichtung oder voneinander abweichende Drehrichtungen umfassen.

4. Steuerungsvorrichtung (2) nach einem der vorhergehenden Ansprüche, **gekennzeichnet durch** mindestens einen zweiten Nebenstrang (28), wobei der Hauptstrang (6) durch die Hauptverteilereinheit (10) mit dem zweiten Nebenstrang (28) gekoppelt ist, mit mindestens einem zweiten Nebenantrieb (30), mit mindestens einem dritten Abtriebsstrang (32) für mindestens einen dritten Abnehmer, mit mindestens einer zweiten Nebenverteilereinheit (34), in der der zweite Nebenstrang (28) und ein mit dem zweiten Nebenantrieb (30) kraftübertragend verbundener zweiter Nebenantriebsstrang (36) ein drittes Summierungsgetriebe (38) bilden, dessen Getriebe-Ausgang mit dem dritten Abtriebsstrang (32) gekoppelt ist, wobei durch die Steuereinheit (22) der zweite Nebenantrieb (30) unabhängig vom Hauptantrieb (4) und vom ersten Nebenantrieb (12) aktiv und/oder inaktiv schaltbar und Drehzahl und Drehrichtung des zweiten Nebenantriebs (30) einstellbar ist.

5. Steuerungsvorrichtung (2) nach Anspruch 4, **gekennzeichnet durch** mindestens einem vierten Abtriebsstrang (42) für mindestens einen vierten Abnehmer, der in oder an der zweiten Nebenverteilereinheit (34) angeordnet ist, wobei in der zweiten Nebenverteilereinheit (34) der zweite Nebenstrang (28) und der zweite Nebenantriebsstrang (36) ein viertes Summierungsgetriebe (40) bilden, dessen Getriebe-Ausgang mit dem vierten Abtriebsstrang (42) gekoppelt ist.

6. Steuerungsvorrichtung (2) nach Anspruch 5, **dadurch gekennzeichnet, dass** der zweite Nebenstrang (28) am dritten Summierungsgetriebe (38) der zweiten Nebenverteilereinheit (34) und am vierten Summierungsgetriebe (40) der zweiten Nebenverteilereinheit (34) eingangsseitig die gleiche Drehrichtung oder voneinander abweichende Drehrichtungen umfasst und/oder dass der zweite Nebenantriebsstrang (36) am dritten Summierungsgetriebe (38) der zweiten Nebenverteilereinheit (34) und am vierten Summierungsgetriebe (40) der zweiten Nebenverteilereinheit (34) eingangsseitig die gleiche Drehrichtung oder voneinander abweichende Drehrichtungen umfassen.

7. Steuerungsvorrichtung (2) nach einem der vorhergehenden Ansprüche, **gekennzeichnet durch** mindestens einen Hauptverteilerantrieb (44), der der Hauptverteilereinheit (10) zugeordnet ist, und durch ein erstes Hauptverteiler-Summierungsgetriebe (46), das durch den Hauptstrang (6) und durch einen mit dem Hauptverteilerantrieb (44) kraftübertragend verbundenen Hauptverteilerantriebsstrang (48) gebildet ist, dessen Getriebe-Ausgang mit dem ersten Nebenstrang (8) gekoppelt ist, wobei durch die Steuereinheit (22) der Hauptverteilerantrieb (44) aktiv und/oder inaktiv schaltbar und die Drehzahl und Drehrichtung des Hauptverteilerantriebs (44) einstellbar ist.

8. Steuerungsvorrichtung (2) nach Anspruch 7, **gekennzeichnet durch** mindestens zweites Hauptverteiler-Summierungsgetriebe (50), das durch den Hauptstrang (6) und durch den Hauptverteilerantriebsstrang (48) gebildet ist und dessen Getriebe-Ausgang mit dem zweiten Nebenstrang (28) gekoppelt ist.

9. Steuerungsvorrichtung (2) nach Anspruch 8, **dadurch gekennzeichnet, dass** der Hauptstrang (6) am ersten Hauptverteiler-Summierungsgetriebe (46) der Hauptverteilereinheit (10) und am zweiten Hauptverteiler-Summierungsgetriebe (50) der Hauptverteilereinheit (10) eingangsseitig die gleiche Drehrichtung oder voneinander abweichende Drehrichtungen umfasst und/oder dass der Hauptverteilerantriebsstrang (48) am ersten Hauptverteiler-Summierungsgetriebe (46) der Hauptverteilereinheit (10) und am zweiten Hauptverteiler-Summierungsgetriebe (50) der Hauptverteilereinheit (10) eingangsseitig die gleiche Drehrichtung oder voneinander abweichende Drehrichtungen umfassen.

10. Steuerungsvorrichtung (2) nach einem der vorhergehenden Ansprüche, **dadurch gekennzeichnet, dass** der erste Abnehmer, der zweite Abnehmer, der dritte Abnehmer und/oder der vierte Abnehmer eine Seileinzugs- und/oder Seilauslassvorrichtung, eine Seilkraftverstärkung und/oder einen Seilspeicher, umfasst.

11. Steuerungsvorrichtung (2) nach einem der vorhergehenden Ansprüche, **dadurch gekennzeichnet, dass** Hauptantrieb (4), Hauptverteilerantrieb (44), erster Nebenantrieb (12) und/oder zweiter Nebenantrieb (30) elektrisch, magnetisch, elektromagnetisch, mechanisch, pneumatisch und/oder hydraulisch betreibbar ist.

12. Steuerungsvorrichtung (2) nach einem der vorhergehenden Ansprüche, **dadurch gekennzeichnet, dass** Hauptantrieb (4), Hauptverteilerantrieb (44), erster Nebenantrieb (12) und/oder zweiter Nebenantrieb (30) einen elektrischen Generator, insbesondere einen Reluktanzmotor umfasst.

13. Steuerungsvorrichtung (2) nach einem der vorhergehenden Ansprüche, **dadurch gekennzeichnet, dass** der Hauptantrieb (4), der Hauptverteilerantrieb (44), der erste Nebenantrieb (12) und/oder der zweite Nebenantrieb (30) jeweils einen einzigen Antrieb umfasst oder durch mehrere Antriebe gebildet ist, die insbesondere durch einen Getriebekranz miteinander gekoppelt sind.

## Geänderte Patentansprüche

### Geänderte Patentansprüche gemäss Regel 137(2) EPÜ.

1. Steuerungsvorrichtung (2) für ein flächenhaftes Windsammelmittel, wie Flugkörper, Profil, Segel oder Kite, mit mindestens einem Hauptantrieb (4), mit mindestens einem mit dem Hauptantrieb (4) kraftübertragend verbundenen Hauptstrang (6), mit mindestens einem ersten Nebenstrang (8), mit mindestens einer Hauptverteilereinheit (10), durch die der Hauptstrang (6) zumindest mit dem ersten Nebenstrang (8) gekoppelt ist, mit mindestens einem ersten Nebenantrieb (12), mit mindestens einem ersten Abtriebsstrang (14) für mindestens einen ersten Abnehmer, mit mindestens einer ersten Nebenverteilereinheit (16), in der der erste Nebenstrang (8) und ein mit dem ersten Nebenantrieb (12) kraftübertragend verbundener erster Nebenantriebsstrang (18) ein erstes Summierungsgetriebe (20) bilden, dessen Getriebe-Ausgang mit dem ersten Abtriebsstrang (14) gekoppelt ist, und mit mindestens einer Steuereinheit (22) durch die der Hauptantrieb (4) und/oder der erste Nebenantrieb (12) jeweils aktiv und/oder inaktiv schaltbar sind und durch die zumindest Drehzahl und Drehrichtung des Hauptantriebs (4) und/oder Drehzahl und Drehrichtung des ersten Nebenantriebs (12) einstellbar sind, **gekennzeichnet durch** mindestens einen zweiten Abtriebsstrang (26) für mindestens einen zweiten Abnehmer, der in oder an der ersten Nebenverteilereinheit (16) angeordnet ist, wobei in der ersten Nebenverteilereinheit (16) der erste Nebenstrang (8) und der erste Nebenantriebsstrang (18) ein zweites Summierungsgetriebe (24) bilden, dessen Getriebe-Ausgang mit dem zweiten Abtriebsstrang (26) gekoppelt ist.

2. Steuerungsvorrichtung (2) nach Anspruch 1, **dadurch gekennzeichnet, dass** der erste Nebenstrang (8) am ersten Summierungsgetriebe (20) der ersten Nebenverteilereinheit (16) und am zweiten Summierungsgetriebe (24) der ersten Nebenverteilereinheit (16) eingangsseitig die gleiche Drehrichtung oder voneinander abweichende Drehrichtungen umfasst und/oder dass der erste Nebenantriebsstrang (18) am ersten Summierungsgetriebe (20) der ersten Nebenverteilereinheit (16) und am zweiten Summierungsgetriebe (24) der ersten Nebenverteilereinheit (16) eingangsseitig die gleiche Drehrichtung oder voneinander abweichende Drehrichtungen umfassen.

3. Steuerungsvorrichtung (2) nach Anspruch 1 oder 2, **gekennzeichnet durch** mindestens einen zweiten Nebenstrang (28), wobei der Hauptstrang (6) durch die Hauptverteilereinheit (10) mit dem zweiten Nebenstrang (28) gekoppelt ist, mit mindestens einem zweiten Nebenantrieb (30), mit mindestens einem dritten Abtriebsstrang (32) für mindestens einen dritten Abnehmer, mit mindestens einer zweiten Nebenverteilereinheit (34), in der der zweite Nebenstrang (28) und ein mit dem zweiten Nebenantrieb (30) kraftübertragend verbundener zweiter Nebenantriebsstrang (36) ein drittes Summierungsgetriebe (38) bilden, dessen Getriebe-Ausgang mit dem dritten Abtriebsstrang (32) gekoppelt ist, wobei durch die Steuereinheit (22) der zweite Nebenantrieb (30) unabhängig vom Hauptantrieb (4) und vom ersten Nebenantrieb (12) aktiv und/oder inaktiv schaltbar und Drehzahl und Drehrichtung des zweiten Nebenantriebs (30) einstellbar ist.

4. Steuerungsvorrichtung (2) nach Anspruch 3, **gekennzeichnet durch** mindestens einem vierten Abtriebsstrang (42) für mindestens einen vierten Abnehmer, der in oder an der zweiten Nebenverteilereinheit (34) angeordnet ist, wobei in der zweiten Nebenverteilereinheit (34) der zweite Nebenstrang (28) und der zweite Nebenantriebsstrang (36) ein viertes Summierungsgetriebe (40) bilden, dessen Getriebe-Ausgang mit dem vierten Abtriebsstrang (42) gekoppelt ist.

5. Steuerungsvorrichtung (2) nach Anspruch 4, **dadurch gekennzeichnet, dass** der zweite Nebenstrang (28) am dritten Summierungsgetriebe (38) der zweiten Nebenverteilereinheit (34) und am vierten Summierungsgetriebe (40) der zweiten Nebenverteilereinheit (34) eingangsseitig die gleiche Drehrichtung oder voneinander abweichende Drehrichtungen umfasst und/oder dass der zweite Nebenantriebsstrang (36) am dritten Summierungsgetriebe (38) der zweiten Nebenverteilereinheit (34) und am vierten Summierungsgetriebe (40) der zweiten Nebenverteilereinheit (34) eingangsseitig die gleiche Drehrichtung oder voneinander abweichende Drehrichtungen umfassen.

6. Steuerungsvorrichtung (2) nach einem der vorhergehenden Ansprüche, **gekennzeichnet durch** mindestens einen Hauptverteilerantrieb (44), der der Hauptverteilereinheit (10) zugeordnet ist, und durch ein erstes Hauptverteiler-Summierungsgetriebe (46), das durch den Hauptstrang (6) und durch einen mit dem Hauptverteilerantrieb (44) kraftübertragend verbundenen Hauptverteilerantriebsstrang (48) gebildet ist, dessen Getriebe-Ausgang mit dem ersten Nebenstrang (8) gekoppelt ist, wobei durch die Steuereinheit (22) der Hauptverteilerantrieb (44) aktiv und/oder inaktiv schaltbar und die Drehzahl und Drehrichtung des Hauptverteilerantriebs (44) einstellbar ist.

7. Steuerungsvorrichtung (2) nach Anspruch 3 und 6, **gekennzeichnet durch** mindestens ein zweites Hauptverteiler-Summierungsgetriebe (50), das durch den Hauptstrang (6) und durch den Hauptverteilerantriebsstrang (48) gebildet ist und dessen Getriebe-Ausgang mit dem zweiten Nebenstrang (28) gekoppelt ist.

8. Steuerungsvorrichtung (2) nach Anspruch 7, **dadurch gekennzeichnet, dass** der Hauptstrang (6) am ersten Hauptverteiler-Summierungsgetriebe (46) der Hauptverteilereinheit (10) und am zweiten Hauptverteiler-Summierungsgetriebe (50) der Hauptverteilereinheit (10) eingangsseitig die gleiche Drehrichtung oder voneinander abweichende Drehrichtungen umfasst und/oder dass der Hauptverteilerantriebsstrang (48) am ersten Hauptverteiler-Summierungsgetriebe (46) der Hauptverteilereinheit (10) und am zweiten Hauptverteiler-Summierungsgetriebe (50) der Hauptverteilereinheit (10) eingangsseitig die gleiche Drehrichtung oder voneinander abweichende Drehrichtungen umfassen.

9. Steuerungsvorrichtung (2) nach einem der vorhergehenden Ansprüche, **dadurch gekennzeichnet, dass** der erste Abnehmer, der zweite Abnehmer, der dritte Abnehmer und/oder der vierte Abnehmer eine Seileinzugs- und/oder Seilauslassvorrichtung, eine Seilkraftverstärkung und/oder einen Seilspeicher, umfasst.

10. Steuerungsvorrichtung (2) nach einem der vorhergehenden Ansprüche, **dadurch gekennzeichnet, dass** Hauptantrieb (4), Hauptverteilerantrieb (44), erster Nebenantrieb (12) und/oder zweiter Nebenantrieb (30) elektrisch, magnetisch, elektromagnetisch, mechanisch, pneumatisch und/oder hydraulisch betreibbar ist.

11. Steuerungsvorrichtung (2) nach einem der vorhergehenden Ansprüche, **dadurch gekennzeichnet, dass** Hauptantrieb (4), Hauptverteilerantrieb (44), erster Nebenantrieb (12) und/oder zweiter Nebenantrieb (30) einen elektrischen Generator, insbesondere einen Reluktanzmotor umfasst.

12. Steuerungsvorrichtung (2) nach einem der vorhergehenden Ansprüche, **dadurch gekennzeichnet, dass** der Hauptantrieb (4), der Hauptverteilerantrieb (44), der erste Nebenantrieb (12) und/oder der zweite Nebenantrieb (30) jeweils einen einzigen Antrieb umfasst oder durch mehrere Antriebe gebildet ist, die insbesondere durch einen Getriebekranz miteinander gekoppelt sind.
